# EUROPÄISCHE PATENTSCHRIFT

(11) **EP 1 761 426 B1**
(45) Veröffentlichungstag und Bekanntmachung des Hinweises auf die Patenterteilung: **28.07.2010**
(21) Anmeldenummer: 05777012.5
(22) Anmeldetag: 29.06.2005
(51) Int. Cl.: B62D 25/14

(54) **KRAFTFAHRZEUG SOWIE TRÄGERANORDNUNG**
MOTOR VEHICLE AND CARRIER ARRANGEMENT
VEHICULE AUTOMOBILE ET ENSEMBLE SUPPORT

(30) Priorität: 29.06.2004 DE 102004032449
(43) Veröffentlichungstag der Anmeldung: 14.03.2007
(73) Patentinhaber: Faurecia Innenraum Systeme GmbH, 76767 Hagenbach (DE)
(72) Erfinder: BRAUN, Marco, 76848 Lug (DE); DOLL, Volker, 76829 Ranschbach (DE); KOBER, Steve, 08233 Treuen (DE)
(74) Vertreter: Pfenning, Meinig & Partner GbR
(86) Internationale Anmeldenummer: PCT/EP2005/007194
(87) Internationale Veröffentlichungsnummer: WO 2006/000465

(56) Entgegenhaltungen:
- DE-A1- 3 419 002
- DE-A1- 19 813 300
- US-A- 3 887 273
- US-A- 4 740 780
- US-A- 5 563 620

## Beschreibung

Die vorliegende Erfindung betrifft ein Kraftfahrzeug. So ist beispielsweise bekannt, in Kraftfahrzeugen im Bereich der Stirnwand, welche Motorraum und Kraftfahrzeuginnenraum voneinander trennt, einen Querträger vorzusehen. Dieser Querträger dient zum einen dem Tragen der Instrumententafel, außerdem können hier schwere Elemente wie beispielsweise die Klimaanlage, Beifahrerairbags etc. gehalten werden. Problematisch ist nun, dass einerseits die Stabilität dieses Querträgers gewünscht ist, andererseits die Montage dieses Trägers, insbesondere wenn er Teile wie Klimaanlagen etc. trägt, sehr aufwendig ist.

Aufgrund des starken Wettbewerbes in der Automobilindustrie ist es außerdem notwendig, die Konstruktionen so zu optimieren, dass eine schnelle Montage im Automobilwerk möglich ist. Hierbei sollte allerdings die Qualität der Kraftfahrzeuge gesichert sein und auch die Einbaubedingungen für die Arbeiter gut sein. Insbesondere bei immer komplexer werdenden Kraftfahrzeugen kann dies allerdings problematisch sein.

Speziell bei Kraftfahrzeugen mit so genannten Head-Up-Displays (HUD) ist dies problematisch. Diese Head-Up-Displays projizieren wichtige Fahrinformationen wie z.B. Fahrzeuggeschwindigkeit oder Motordrehzahl direkt auf die Windschutzscheibe, so dass diese Informationen vom Fahrer im Nahbereich abgelesen werden können, ohne den Blick von der Windschutzscheibe abzuwenden.

Dieses Zusammenspiel mit der Windschutzscheibe stellt die Fahrzeugkonstrukteure allerdings vor neue Herausforderungen. Die komplexe Projektionsvorrichtung muss vorzugsweise bereits vor ihrem Einbau im Zusammenspiel mit anderen Elektronikkomponenten im Kraftfahrzeug getestet werden können, um aufwendige Rückbauarbeiten zu verhindern. Zum anderen sollte eine schnelle und sichere Anbindung der Projektionsvorrichtung an die Windschutzscheibe ermöglicht werden, damit sich hier ein wackelfreies Bild, auch bei Fahrzeugvibration, ergibt.

Die DE 198 13 300 A1 zeigt eine Anzeigevorrichtung, insbesondere ein Insasseninformationssystem für Kraftfahrzeuge, mit einer Einrichtung zum Projizieren wenigstens eines virtuellen Bildes vor einer Windschutzscheibe des Kraftfahrzeugs (Head-Up-Display). Das Head-Up-Display ist eine Bildquelle zur Erzeugung von für den Fahrer wesentlichen Informationen, wie Geschwindigkeit, Drehzahl und weitere Zustandsinformationen. Die Bildquelle kann beispielsweise ein durchleuchteter LCD-Schirm oder eine Laserlichtquelle sein, die im Bereich der Armaturentafel angebracht ist.

Die gattungsgemässe US 3 887 273 zeigt eine Projektionseinrichtung zum Projizieren von Fahrerinformationen auf die Windschutzscheibe. Hierbei handelt es sich um eine Projektionsvorrichtung, die in einem horizontal vor dem Lenkrad positionierten Plattenabschnitt eingefügt ist.

Der vorliegenden Erfindung liegt daher die Aufgabe zugrunde, ein Kraftfahrzeug bzw. ein Instrumententafelmodul zu schaffen, wobei einerseits Elemente wie Lenkung, Pedallerie Head-Up-Display, Klimaanlage etc. stabil halten kann, im übrigen jedoch eine größtmögliche Freiheit bei der Innenraumgestaltung eines Kraftfahrzeugs gewährleistet und eine einfache Montage der Gesamtanordnung gegeben ist.

Diese Aufgabe wird durch die Gegenstände der unabhängigen Patentansprüche erfüllt.

Übergreifender Gedanke der Anmeldung ist, dass eine leichte Montierbarkeit einer Trägeranordnung bzw. eines Trägermoduls gegeben ist.

Dies wird dadurch erreicht, dass der Fensterspriegel auf der zum Motorraum des Kfz hin orientierten Seite Ausnehmungen aufweist, welche das einfache Anbringen (z.B. Verschrauben) einer Trägeranordnung bzw. eines HUD (Head-Up-Display) ermöglichen.

Es ist somit erstmals möglich, ein entsprechendes Modul komplett vorzufertigen (einschließlich Instrumententafelabdeckung) und eine schnelle Montage (justin-time) vorzunehmen. Hierbei enthält die Rohkarosse bereits einen Fensterspriegel, der Fensterspriegel ist nicht (wie beim Stand der Technik) Teil des Moduls. Dadurch wird die Steifigkeit des Verbaus entscheidend verbessert, ohne dass die Montage komplizierter wird.

So ist einerseits ein Kraftfahrzeug mit einer Trägeranordnung zum Tragen der Lenksäule und/oder Pedallerie, wobei das Kraftfahrzeug einen unterhalb einer Windschutzscheibe im Bereich zwischen den beiden A-Säulen des Kraftfahrzeugs verlaufenden Fensterspriegel aufweist, möglich. Hierbei weist die Trägeranordnung zur Ersetzung eines zum Fensterspriegel zusätzlichen Querträgers, welcher üblicherweise zwischen den beiden A-Säulen eines Fahrzeugs verläuft, eine erste und eine zweite Strebe auf, wobei die Anfangspunkte der Streben im Bereich der Lenksäule angeordnet sind und der Endpunkt der ersten Strebe im Bereich der fahrerseitigen A-Säule und der Endpunkt der zweiten Strebe im Bereich der Mittelkonsole liegt und die Trägeranordnung an dem Fensterspriegel befestigt ist.

Die entsprechende Trägeranordnung zum Einbau in ein Kraftfahrzeug weist also z.B. eine erste und eine zweite Strebe auf, wobei die Anfangspunkte der Streben in einem Montagebereich für eine Lenksäule gegeben sind und der Endpunkt der ersten Strebe im Bereich einer fahrerseitigen A-Säule eines Kraftfahrzeugs und der Endpunkt der zweiten Strebe im Bereich der Mittelkonsole des Kraftfahrzeugs anbringbar ist und die Trägeranordnung außerdem im Bereich des Lenksäulenmontagebereichs an einem Fensterspriegel befestigbar ist. Der Fensterspiegel weist erfindungsgemäß derartige Ausnehmungen auf, dass die Trägeranordnung vom Motorraum des Kraftfahrzeugs aus am Fensterspriegel befestigbar ist.

In dieser Ausführungsform wird die eigentlich tragende Funktion von zwei (diagonalen) Streben gesichert, welche einerseits zwischen fahrerseitiger A-Säule und Fensterspriegel und andererseits zwischen Fensterspriegel und Mittelkonsole verlaufen, wobei die beiden Streben sich hierbei im Bereich einer Befestigung für eine Lenksäule treffen, welche im Bereich des Fensterspriegels liegt. Die diagonalen Streben werden hierbei soweit zum Motorraum hin verlagert, dass auch fahrerseitig entsprechend genügend Knieraum vorhanden ist.

Zur Aufnahme der Lenkung dient also beispielsweise ein Dreifuß (oben als "Trägeranordnung" bezeichnet). Dieser unterscheidet sich von bekannten Lösungen in der diagonalen Anordnung der Abstützungen an Mitteltunnel und A-Säule. Dadurch wird bei einer vertikalen Belastung am Lenkrad keine Torsion in den Dreifuß eingeleitet, so dass auch offene Profile ohne Steifigkeitsverlust für den Dreifuß genutzt werden können. Da die diagonalen Verstrebungen hauptsächlich auf Druck belastet werden, können neben herkömmlichen Metallwerkstoffen auch faserverstärkte Kunststoffe genutzt werden, ohne im Vergleich zu bekannten Querträgerkonzepten niedrigere Lenkradeigenfrequenzen bzw. höhere Durchbiegungen bei vertikaler Lenkradbelastung zu erreichen.

Weiterhin bietet sich an, etwaige Komponenten wie HUD (Head-up-Display), Pedallerie und Bremskraftverstärker zu integrieren.

Vorteilhafterweise weist die Trägeranordnung im Anbindungsbereich zum Fensterspriegel einen Aufnahmeraum für die Projektionsvorrichtung eines HUD auf. Hiermit wird diese empfindliche Projektionsvorrichtung durch die entsprechend stabile Trägeranordnung umgeben und somit geschützt. Die HUD wird also zwischen Fenstersprigel und Lenkwellenausgang an der Trägerordnung befestigt. Hierdurch wird dieser Bauraum optimal genutzt.

Es ist darauf zu achten, dass bei der entsprechenden Instrumententafel bzw. bei dem Instrumententafelträger auf dessen Oberseite entsprechend eine Öffnung vorgesehen ist, um den Projektionsstrahl des HUD durchzulassen. Hierbei ist besonders vorteilhaft, dass beispielsweise der Instrumentafelträger symmetrisch ausgeführt werden kann: fahrerseitig ist das HUD und beifahrerseitig ein Beifahrerairbag an der jeweils entsprechenden Stelle anzubringen. Hiermit wird es möglich, beispielsweise die Lüftungskanäle symmetrisch vorzusehen.

Das erfindungsgemäße Kraftfahrzeug enthält vorzugsweise eine Windschutzscheibe, einen unterhalb der Windschutzscheibe verlaufenden Fensterspriegel sowie ein zumindest bereichsweise über die Fahrzeugbreite verlaufenden Querträger, wobei der Querträger über mindestens ein Tragelement mit dem Fensterspriegel des Kraftfahrzeugs verbindbar ist, wobei im Zwischenraum zwischen Querträger und Fensterspriegel eine Projektionsvorrichtung eines Head-up-Displays (HUD) vorgesehen ist und der Fensterspriegel derartige Ausnehmungen aufweist, dass die Projektionsvorrichtung des HUD vom Motorraum des Kraftfahrzeugs aus am Fensterspriegel fixierbar ist.

Unter "Fensterspriegel" wird hierbei der an der Unterkante der Windschutzscheibe vorgesehene (mitunter auch "Windlauf" genannte) Träger verstanden. Dieser ist in praktisch jedem Kraftfahrzeug vorgesehen und von dem hierzu bestehenden üblicherweise zusätzlich vorgesehenen "Querträger", welcher im Bereich des Fahrzeuginnenraums verläuft, unabhängig.

Der "Querträger" kann im Sinne der vorliegenden Erfindung über die volle Breite des Kraftfahrzeugs verlaufen oder auch alternativ lediglich über einen Teilbereich verlaufen. Dieser ist vorzugsweise im fahrerseitigen Bereich, in diesem Falle kann der Querträger (als Teil eines so genannten "Dreifußes") lediglich bereichsweise dazu dienen, die Lenksäule bzw. die Pedallerie in diesem Bereich abzustützen, so dass im beifahrerseitigen Bereich durch den Entfall des Querträgers im dortigen Bereich der Bauraum flexibler nutzbar ist.

Zwischen Fensterspriegel und Querträger ist die Projektionsvorrichtung eines Head-up-Displays vorgesehen, welcher ein entsprechendes Bild in die Windschutzscheibe projiziert. Die Projektionsvorrichtung weist an ihrer dem Querträger abgewandten Seite (also zum Fensterspriegel hin) eine Befestigungsvorrichtung auf. Der Fensterspriegel weist wiederum Ausnehmungen auf, so dass vom Motorraum her (also durch den Fensterspriegel bzw. die Stirnwand hindurch) eine Fixierung der Projektionsvorrichtung möglich ist.

Dies hat für die Montage gewaltige Vorteile. Ein Instrumententafelmodul kann mit bereits vormontierter Projektionsvorrichtung versehen werden, auch die datentechnischen Anschlüsse können bereits im Vorfeld vorgesehen und entsprechend geprüft werden. Das Instrumententafelmodul kann insofern schon fertig mit der Instrumententafelverkleidung versehen werden, da die abschließende Fixierung der Projektionsvorrichtung vom Motorraum aus erfolgt. Hierzu ist es besonders vorteilhaft, dass die Projektionsvorrichtung "schwimmend" gelagert ist und die abschließende feste Fixierung vom Motorraum her lediglich der Definition der Endlage der Projektionsvorrichtung dient, ohne dass hier zusätzliche Abstimmungsvorgänge notwendig sind. Hierdurch wird außerdem gewährleistet, dass eine feste Fixierung an dem Fensterspriegel vorgesehen wird. Dieser Fensterspriegel ist ebenfalls mit der Windschutzscheibe fest verbunden. Dadurch dass beide Komponenten somit "im Gleichlauf" befestigt sind bzw. schwingen, wird ein im Wesentlichen rüttelfreies Bild der Projektionsvorrichtung auf der Windschutzscheibe erzielt.

Das erfindungsgemäße Instrumententafelmodul enthält also einen zumindest bereichsweise über die Kraftfahrzeugbreite verlaufenden Querträger, ein Tragelement zur Anbindung des Querträgers an einen Fensterspriegel sowie eine im Bereich von Querträger und Tragelement angebrachte Projektionsvorrichtung eines Head-up-Displays, wobei an der dem Querträger abgewandten Seite der Projektionsvorrichtung eine Befestigungsvorrichtung zur Anbindung der Projektionsvorrichtung an dem Fensterspriegel vorgesehen ist. Diese Befestigungsvorrichtung kann eine Schnappverbindung etc. sein, vorzugsweise ist es jedoch eine Schraubenöffnung, welche ein festes Verschrauben mit dem Fensterspriegel ermöglicht.

Der Fensterspriegel ist üblicherweise als Metallteil ausgeführt. Alternativ sind selbstverständlich auch andere stabile Werkstoffe wie glasfaserverstärkte Kunststoffe etc. möglich. Der Fensterspriegel ist ferner aus Leichtbau- und Stabilitätsgründen als Hohlprofil ausgeführt. Hierbei weist der Fensterspriegel üblicherweise Ausnehmungen in Form von Löchern auf, welche das "Überbrücken" des Hohlraums im Fensterspriegel ermöglichen und somit eine Anbindung der Projektionsvorrichtung auf der dem Motorraum abgewandte Seite des Fensterspriegels. Selbstverständlich können diese Ausnehmungen auch in Form von seitlichen Ausbuchtungen des Fensterspriegels gegeben sein, wichtig ist lediglich, dass durch diese Ausnehmungen bzw. Öffnungen eine feste Verbindung der Projektionsvorrichtung mit dem Fensterspriegel vom Motorraum aus erfolgen kann.

Bei dem erfindungsgemäßen Verfahren zur Montage eines Kraftfahrzeugs wird also eine Kraftfahrzeugkarosserie, welche unterhalb des Bereichs einer zu montierenden Windschutzscheibe einen Fensterspriegel enthält, mit einem Instrumententafelmodul verbunden, welches bereits eine Projektionsvorrichtung eines HUD enthält. Das Instrumententafelmodul wird mit dem Fensterspriegel und/oder weiteren Teilen der Karosserie zunächst fest verbunden und zusätzlich die Projektionsvorrichtung des HUD vom Motorraum aus mit dem Fensterspriegel durch Befestigungsmittel, vorzugsweise Schrauben, fest verbunden.

Der Instrumententafelträger ist durch Verrippungen bzw. durch die Anbindung der Luftkanäle selbsttragend ausgeführt. Am Instrumententafelträger sind Beifahrer-Airbag sowie Handschuhkasten direkt angebunden. Somit ist auf der Beifahrerseite kein Querträger notwendig. Als günstig hat sich erwiesen, den BeifahrerAirbag in Richtung Frontscheibe zu verschieben. Damit kann der Bauraum oberhalb des Handschuhkastens als zusätzliches Ablagefach, zur Aufnahme von MultimediaGeräten usw. genutzt werden.

Mit Verlagerung des Beifahrer-Airbags an die Frontscheibe erhält man auch eine Symmetrie zwischen Fahrer- und Beifahrerseite, so dass z.B. der Luftkanal als Gleichteil für Linkslenker und Rechtslenker ausgeführt werden kann.

Für die Anbindung der Klimaanlage gibt es mehrere Möglichkeiten. Bei Fahrzeugkonzepten mit geschraubter Stirnwand-Montageplatte kann die Klimaanlage direkt an die Montageplatte geschraubt werden. Die Klimaanlage ist dabei nur durch Blasformteile mit dem Instrumententafelträger verbunden. Der Vorteil dieser Variante liegt in einer akustischen Entkopplung der Klimaanlage vom Instrumententafelträger. Weiterhin wird durch die zusätzliche Masseanbindung an der Stirnwand die Schalldämmung im niederfrequenten Bereich verbessert. In der Vormontage wird weiterhin der Lenkungs-Dreifuß mit dem Instrumententafelträger verbunden. Bei dieser Variante können Stirnwand-Montageplatte, Lenkungs-Dreifuß und Instrumententafelträger als Modul verbaut werden.

Bei Fahrzeugkonstruktionen mit geschweißter Stirnwand ändert sich die Verbaureihenfolge. Hierbei wird die Klimaanlage direkt im Rohbau am Dreifuß und am Instrumententafelträger fixiert. In der Vormontage wird hier zuerst der Lenkungs-Dreifuß mit der Klimaanlage verbunden. Danach wird der Instrumententafelträger auf beide Bauteile aufgeschraubt. Es ergibt sich wiederum ein Gesamtmodul. Im Fahrzeug wird dann der Lenkungs-Dreifuß sowie die Klimaanlage eingeschraubt.

Aus der Idee, die tragende Struktur vollkommen in der Oberschale durch Kunststoffverrippungen abzubilden, ergaben sich folgende Probleme im Lenkradbereich. Da hier, bedingt z.B. durch den Mantelrichttest die größten Belastungen auftreten, wäre hier eine stärkere Verrippung als in der übrigen Instrumententafel notwendig. Diese übermäßige Versteifung an der Oberfläche der Instrumententafel würde im Crashfall zu einer übermäßigen Belastung im Kniebereich führen. Ein weiteres Problem stellt der Reparaturfall dar. Bei Ausbau des Instrumententafelträgers wäre die Lenkung nicht mehr fest im Fahrzeug fixiert, so dass auch hier, wenn auch nur im Reparaturfall eine zusätzliche Lenkungsabstützung nötig wäre.

Durch die Dreifuß-Konstruktion verlagert man die tragende Struktur im Bereich der Fahrerseite in das Innere der Instrumententafel. Dadurch ergibt sich zwischen Dreifuß und Instrumententafel ein Freiraum, wodurch sich im Crashfall eine gewisse Eindringtiefe der Knie realisieren lässt. Weiterhin ist es denkbar, Crashpads bzw. Knieairbags am Lenkungs-Dreifuß zu fixieren.

Auf der Beifahrerseite befindet sich die tragende Struktur außerhalb der Kniekontaktzone. Oberes Staufach und Handschuhkasten sind untereinander verbunden und sind gemeinsam am Luftkanal fixiert. Dadurch muss die gesamte Masse nicht mehr durch die Instrumententafel abgefangen werden, wodurch sich wiederum die Verrippungen reduzieren lassen.

Eine vorteilhafte Weiterbildung sieht vor, dass mindestens eine Strebe aus Metall, Kunststoff oder faserverstärktem Kunststoff insbesondere glasfaserverstärktem oder kohlefaserverstärktem Kunststoff, ist. Hierbei ist beispielsweise glasfaserverstärkter Kunststoff sinnvoll, wenn die Streben relativ nah an dem Fahrersitz angeordnet sind, da hier primär eine Druckbelastung im Bereich des Lenkrads in dessen Achsrichtung erfolgt. Bei in Richtung des Motorraums versetzten Streben ist es vorteilhaft, diese aus Metall auszuführen, um eventuelle zusätzliche Torsionskräfte besser auffangen zu können. Außerdem ist es je nach Gestaltung möglich, die Streben aus einem offenen oder einem geschlossenen Profil herzustellen, je nach dem welche Torsionsbelastung angenommen wird.

Eine besonders vorteilhafte Weiterbildung sieht vor, dass die Trägeranordnung neben bzw. alternativ zur Lenksäule auch die Pedallerie oder einen Bremskraftverstärker trägt. Es ist außerdem möglich, dass insbesondere im Lenksäulenmontagenbereich ein Head-up-Display (HUD) vorgesehen ist, mit welchem Fahrerinformationen direkt auf die Windschutzscheibe projiziert werden können.

Der Aufbau der Trägeranordnung kann variieren. Grundsätzlich sinnvoll ist es jedoch, die vorzugsweise diagonal verlaufenden Streben vorzusehen, welche sich in einem Lenksäulenmontagebereich treffen. Hierbei kann durchaus der Lenksäulenmontagebereich gerippeartig oder plattenartig ausgeführt sein, vorzugsweise als horizontale Platte oder horizontaler Rahmen, welche beispielsweise als Trageplatte für das HUD dienen können. Die Anbindung an den Fensterspriegel kann wiederum über eine zusätzliche Montageplatte erfolgen, um eine besonders stabile Anbindung zum Fensterspiegel hin zu erreichen. Je nach Ausführungsform können die Anfangspunkte der Streben, welche an der Lenksäule angeordnet sind, zusammentreffen oder auch voneinander beabstandet sein, beispielsweise kann ein horizontaler Abstand von 3 cm bis 30 cm zwischen den Anfangspunkten (vom Strebenmittelpunkt aus gesehen) bestehen.

Eine vorteilhafte Weiterbildung sieht vor, dass das erfindungsgemäße Kraftfahrzeug einen Instrumententafelträger enthält, welcher selbsttragend ausgeführt ist. Dieser Instrumententafelträger, welcher Teil einer Instrumententafel ist, ist vorzugsweise mit der Trägeranordnung zur Erhöhung der Stabilität verbunden. Durch diesen selbsttragenden Instrumententafelträger ist es beispielsweise möglich, Airbag oder Handschuhfach auf der Beifahrerseite unterzubringen. Es ist kein Querträger notwendig, um diese Bauteile zu halten. Es hat sich außerdem als günstig erwiesen, gegenüber üblichen Konstruktionen den Beifahrerairbag in Richtung der Frontscheibe zu verschieben. Damit kann der Bauraum oberhalb des Handschuhkastens, welcher ebenfalls in dem Instrumententafelträger vorgesehen ist, als zusätzliches Ablagefach bzw. zur Aufnahme von Multimediageräten genutzt werden. Besonders vorteilhaft ist, dass hierdurch auch eine Symmetrie zwischen Fahrer und Beifahrerseite geschaffen wird, so dass z.B. der Luftkanal als Gleichteil für linksgelenkte als auch rechtsgelenkte Kraftfahrzeuge hergestellt werden kann.

Prinzipiell kann bei erfindungsgemäßen Fahrzeugen zur Trennung von Fahrzeuginnenraum und dem Motorraum beispielsweise eine mit der Rohkarosserie des Kraftfahrzeugs verschweißte Stirnwand oder auch eine mit der Rohkarosserie des Fahrzeugs verschraubte Stirnwand-Montageplatte vorgesehen sein.

Hierbei ist es im Falle einer geschraubten Stirnwand möglich, praktisch sämtliche mit der Instrumententafel in Verbindung stehenden Bauteile (Klimaanlage, Trägeranordnung sowie die Stirnwand-Montageplatte selbst) vorzufertigen und als ein Modul "just in time" in das Kraftfahrzeug einzubauen.

Im Falle einer geschweißten Stirnwand ist es auch möglich, eine Einheit aus der erfindungsgemäßen Trägeranordnung (mit Lenksäule, Pedallerie etc.) sowie Klimaanlage und Instrumententafel (inklusive Instrumententafelträger) vorzufertigen und dann auf die verschweißte Stirnwand aufzusetzen. Hierbei kann beispielsweise die Festlegung der Klimaanlage durch Formschluss zur Stirnwand geschehen und die Festlegung (in Fahrzeuglängsrichtung) durch die Verschraubung des Instrumententafelträgers mit der Rohkarosse erfolgen. Zwischen der Klimaanlage und der Instrumententafel sind hierbei vorzugsweise Blasformteile vorgesehen, welche dem Toleranzausgleich und der Schallentkopplung dienen.

Eine weitere vorteilhafte Weiterbildung sieht vor, dass die erste und/oder zweite Strebe in ihrem Verlauf in einem auf Fahrzeugslängsachse (X-Achse), Fahrzeughochachse (Z-Achse) und Fahrzeugseitachse (Y-Achse) bezogenen X-, Y-, Z-Koordinatensystem in mindestens zwei Koordinatenrichtungen einen Versatz von mehr als 8 cm, vorzugsweise mehr als 10 cm, besonders vorzugsweise mehr als 20 cm aufweist. Hiermit ist also umschrieben, dass diese Streben "diagonal" verlaufen. Hierdurch wird eine bessere Kraftaufnahme ermöglicht, insbesondere eine Torsion der Trägeranordnung bei Belastung der Lenksäule in Z-Richtung weitestgehend verhindert. Es hat sich gezeigt, dass durch diesen Stabilitätsgewinn die Trägeranordnung noch näher zur Stirnwand hin verbaut werden kann (also von den Fahrzeuginsassen weg). Hierdurch wird wiederum Knieraum gewonnen bzw. ein Anstoßen von Knien der Insassen wird unwahrscheinlicher.

Eine weitere vorteilhafte Weiterbildung sieht vor, dass der Abstand der Anfangspunkte der Streben im Bereich der Längssäule zwischen 3 und 30 cm, vorzugsweise zwischen 15 und 30 cm liegt. Hierdurch ist einerseits die sehr stabile Aufnahme durch die diagonalen Streben gewährleistet, andererseits kann in dem Bereich zwischen den Anfangspunkten das HUD leicht aufgenommen werden. Entsprechend kann auch an der Unterseite die Pedallerie leicht aufgenommen werden.

Eine weitere vorteilhafte Weiterbildung sieht vor, dass im Knieaufprallbereich des Kraftfahrzeugs der Abstand zwischen den Streben und der zugewandten Seite der Instrumententafel mindestens 40 mm beträgt. Unter "Knieaufprallbereich" wird hierbei der gesamte Bereiche der Instrumententafel, von der Unterseite des Längssäulenausgangs abwärts, verstanden. Alternativ bzw. ergänzend ist es möglich, dass auf voller Länge der Streben der Mindenstabstand zur zugewandten Fläche der Instrumententafel mindestens 40 mm beträgt. Mit "voller Länge" ist hierbei der nur leicht gekrümmte bzw. unabgeknickte Abschnitt der jeweiligen Strebe zu verstehen (also die Länge der Strebe, abgesehen von einem eventuell "abgeknickten" Endbereich).

Eine weitere vorteilhafte Weiterbildung sieht vor, dass die Trägeranordnung im Bereich der Längssäule von den Streben ausgehend zwei seitliche Platten zur Anbindung am Fensterspriegel aufweist, wobei der von Platten sowie Fenstersprigel umfasste Raum der Aufnahmeraum für die Projektionsvorrichtung des HUD ist. Diese "Platten" können hierbei frei herauskragende Platten sein oder auch Teil eines oben "offenen" Quaders. Wichtig ist, dass hier ein Schutzraum für das HUD geschaffen wird. Dieser sollte zur Strahlführung nach oben hin frei sein.

Eine weitere vorteilhafte Weiterbildung sieht vor, dass im Bereich der Anfangspunkte der Streben eine Längssäulenfixierung eben ist. Diese Fixierung legt die Längssäule an diesem Ort translatorisch fest, selbstverständlich nicht axial in Lenkdrehrichtung.

Eine weitere vorteilhafte Weiterbildung sieht vor, dass auf der Unterseite der Trägeranordnung die Pedallerie befestigt ist. Hierbei ist die Pedallerie vorzugsweise zwischen den seitlichen Platten (welche die Anbindung der Trägeranordnung am Fensterspriegel bewerkstelligen) befestigt.

Eine vorteilhafte Weiterbildung sieht vor, dass der Querträger vom Bereich der linken A-Säule des Kraftfahrzeugs zum Bereich der rechten A-Säule des Kraftfahrzeugs durchgehend ist. Es ist allerdings alternativ auch möglich, dass der Querträger lediglich bereichsweise (auch vorzugsweise fahrerseitig) verläuft. Hierbei kann ein so genannter "Dreifuß" vorgesehen werden. Dieser bietet einen "bereichsweisen" Querträger, welcher beispielsweise der Anbindung von Pedalerie und Lenkrad dient und welcher seitlich durch Streben an der A-Säule bzw. der Mittelkonsole abgestützt wird.

Eine weitere vorteilhafte Weiterbildung sieht vor, dass zwei Tragelemente vorgesehen sind, welche den Querträger und den Fensterspriegel bzw. die darunter liegende Stirnwand verbinden. Diese Tragelemente sind vorzugsweise plattenförmige ausgeführt. Auf diese Weise können sie leicht mit dem Querträger verschweißt bzw. in diesen hineingesteckt werden, eine bereichsweise Abwinklung der Tragelemente ist ebenfalls leicht vorzusehen. Die Tragelemente können außerdem Ausschnitte zur Aufnahme von Halteplatten aufweisen. Diese "Halteplatten" können allerdings auch als integrale Bestandteile der Tragelemente vorgesehen werden.

Vorzugsweise weisen die Halteplatte und die Projektionsvorrichtung des HUD komplementäre Ausnehmungen bzw. hervorstehende Abschnitte auf, welche eine schwimmende Lagerung der Projektionsvorrichtung ermöglichen. Beispielsweise können an der Halteplatte Elastomerblöcke vorgesehen sein, welche formschlüssig in schienenmäßige Vertiefungen der Projektionsvorrichtung eingreifen. Hierdurch ist eine Festlegung in fünf Freiheitsgraden (sämtliche Freiheitsgrade bis auf die Bewegungsrichtung in Schienen-Richtung) möglich. Diese Schienen-Richtung ist vorzugsweise die in Fahrzeuglängsrichtung orientierte X-Achse. Die endgültige Fixierung in der X-Achse erfolgt dann durch die motorraumseitige Befestigung der Projektionsvorrichtung an dem Fensterspriegel. Durch die Lagerung auf Elastomerblöcken ist eine Vibrationsdämpfung der Projektionsvorrichtung gegeben. Entsprechende Vibrationsdämpfung kann auch im Bereich der Befestigung der Projektionsvorrichtung zum Fensterspriegel hin vorgesehen werden.

Die Tragelemente können einerseits am Fensterspriegel und andererseits auch zusätzlich an unterhalb des Fensterspriegels befindlichen Bauteilen der Karosserie, beispielsweise einer dort befindlichen Stirnwand oder auch an den A-Säulen der Kraftfahrzeugkarosserie befestigt werden. Diese Befestigung erfolgt vorzugsweise über Vernietung oder Verschraubung. Es ist allerdings auch möglich, hier eine Verklipsung mit komplementären Rastelementen vorzusehen. Problematisch hieran ist jedoch, dass die Fixierung in jedem Falle fest genug sein muss, um einen problemlosen Dauerbetrieb zu gewährleisten. Von daher sind vorzugsweise stiftförmige drehbare Befestigungsmittel (vorzugsweise Schraube oder entsprechende Drehbolzen) vorzusehen. Vorzugsweise ist der Fensterspriegel auch als Hohlkörper ausgeführt, welcher entsprechend fluchtende Öffnungen zum Durchführen von stiftförmigen Befestigungsmitteln aufweist. Hierzu sind vorzugsweise größere Öffnungen auch zum Motorraum hin gegeben, so dass eine Verschraubung für den Arbeiter leichter durchzuführen ist.

Eine besondere Weiterführung des Instrumententafelmoduls sieht vor, dass dieses bereits eine Instrumententafelverkleidung aufweist, also eine endgültige Montage der Instrumententafelverkleidung nicht nochmals nachfolgend erfolgen muss. Wichtig ist lediglich, dass eine Öffnung bzw. Ausnehmung vorgesehen ist zum Durchleiten eines Lichtstrahls von der Projektionsvorrichtung des HUD zur Windschutzscheibe hin.

Weitere vorteilhafte Weiterbildungen werden in den übrigen abhängigen Ansprüchen angegeben.

Die Erfindung wird nun anhand mehrerer Figuren erläutert. Es zeigen:
- Fig. 1: eine erfindungsgemäße Trägeranordnung;
- Fig. 2: die Trägeranordnung aus Figur 1 mit einem darüber befindlichen Instrumententafelträ- ger;
- Fig. 3: eine Montageskizze für Kraftfahrzeug mit verschraubter Stirnwand, sowie
- Fig. 4: eine Montageskizze für Fahrzeuge mit ge- schweißter Stirnwand,
- Fig. 5: eine Explosionsansicht eines erfindungsgemä- ßen Kraftfahrzeugs,
- Fign. 6 und 7: Detailansichten einer Projektionsvorrichtung eines Head-Up-Displays, und
- Fig. 8: Einbau der Projektionsvorrichtung in ein In- strumententafelmodul.

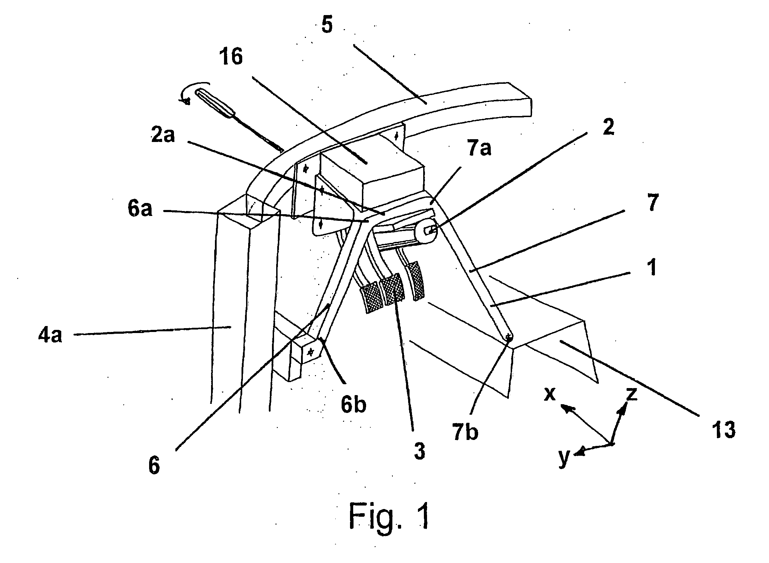

Figur 1 zeigt einen Teil eines Kraftfahrzeugs mit einer erfindungsgemäßen Trägeranordnung 1. Diese Trägeranordnung ist mit einer zu ihr gehörigen Montageplatte an einem Fensterspriegel 5 befestigt, welcher unterhalb einer Windschutzscheibe im Bereich zwischen den beiden A-Säulen des Kraftfahrzeugs verläuft. Zur leichteren Orientierung ist in den Figuren jeweils ein Koordinatensystem gezeigt. Hierbei weist die X-Achse in Fahrzeugslängsrichtung, die Y-Achse in Fahrzeugseitrichtung und die Z-Achse in Fahrzeughochachsenrichtung.

Die Trägeranordnung 1 weist eine erste Strebe 6 und eine zweite Strebe 7 auf zur Ersetzung eines zum Fensterspriegel zusätzlichen Querträgers, wie er in Fahrzeugen nach dem Stand der Technik üblich ist. Die Anfangspunkte der Streben 6 und 7 sind im Bereich einer Lenksäule 2 (also im "Lenksäulenmontagebereich 2a") untergebracht (als Anfangspunkte werden die am höchsten liegenden Punkte der diagonalen Streben angesehen). Der Anfangspunkt der Strebe 6 ist hierbei mit 6a bezeichnet, der Endpunkt der Strebe 6 mit 6b. Der Anfangspunkt der Strebe 7 ist mit 7a bezeichnet, der Endpunkt der Strebe 7 mit 7b. Hierbei ist zwischen den Anfangspunkten der ersten und der zweiten Strebe ein horizontaler Abschnitt von 30 cm. Länge gegeben, um den Fußraum für eine Pedallerie 3, welche ebenfalls im Lenksäulenbereich 2a montiert ist, bereitzustellen. Der Anfangspunkt der ersten Strebe 6 ist im Lenksäulenmontagebereich 2a bzw. im Bereich der Lenksäule 2 und der Endpunkt der ersten Strebe im Bereich der fahrerseitigen A-Säule 4a, wobei die Strebe hier an einen Längsträger, welcher mit der fahrerseitigen A-Säule verbunden ist, verbunden ist. Zudem weist die Strebe eine (nicht notwendigerweise zwingende) Abknickung in ihrem Endbereich auf.

Die zweite Strebe hat ihren Anfangspunkt ebenfalls im Bereich der Lenksäule 2 (Lenksäulenmontagebereich 2a) und verläuft diagonal zur Mittelkonsole 13 hin, wo der Endpunkt der zweiten Strebe liegt.

Es sei ergänzt, dass es nicht zwingend notwendig ist, dass erste Strebe 6 und zweite Strebe 7 körperlich aus zwei Bauteilen hergestellt sind. Es wäre auch ausreichend, eine "durchgehende" Strebe vorzusehen.

Die erfindungsgemäße Trägeranordnung ist quasi ein "Dreifuß", da ersten eine Anbindung an den Bereich der fahrerseitigen A-Säule, zweitens eine Anbindung an die Mittelkonsole und drittens eine Anbindung an den Fensterspriegel 5 gegeben ist. Die Ausbildung der Trägeranordnung ist darüber hinaus relativ beliebig, solang diese drei Angriffspunkte gegeben sind und die Trägeranordnung für sich genommen (ohne die Trägerfunktion im Beifahrerraum vorzusehen) gegeben ist.

Die Streben 6 und 7 sind vorliegend aus Metall gefertigt und aus einem geschlossenen Rechteckprofil. Die Anbindung der Trägeranordnung an den Fensterspriegel bzw. die übrigen Bauelemente erfolgt vorliegend durch Verschraubung, selbstverständlich sind auch andere Anbindungen, beispielsweise durch Verschweißung, Verklebung möglich.

Auf der Oberseite der Trägeranordnung 1 ist eine Fläche gezeigt, auf welcher ein HUD 16 montiert ist. An diese Fläche angrenzend ist dann die Montageplatte zum Fensterspriegel 5 vorgesehen, welche mit in Figur 1 erkennbaren Schraublöchern versehen ist. Alternativ können außerdem Bremskraftverstärker etc. an der erfindungsgemäßen Trägeranordnung befestigt sein.

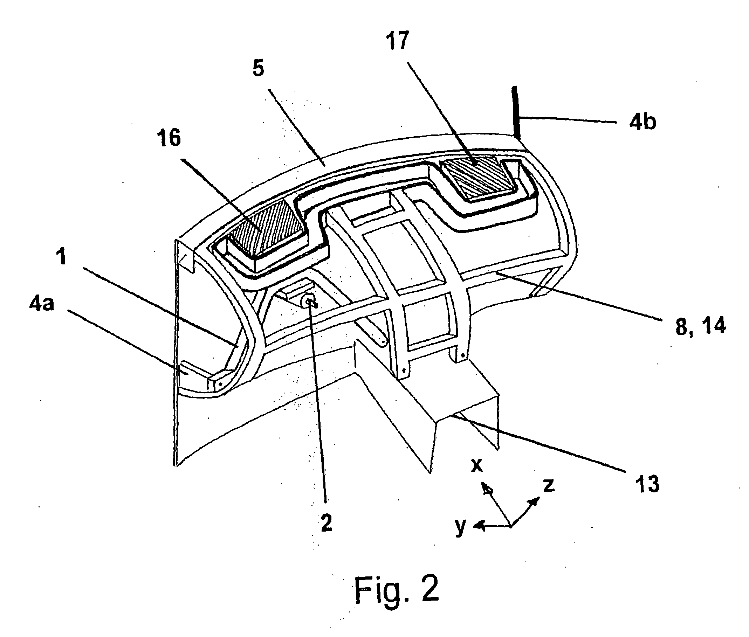

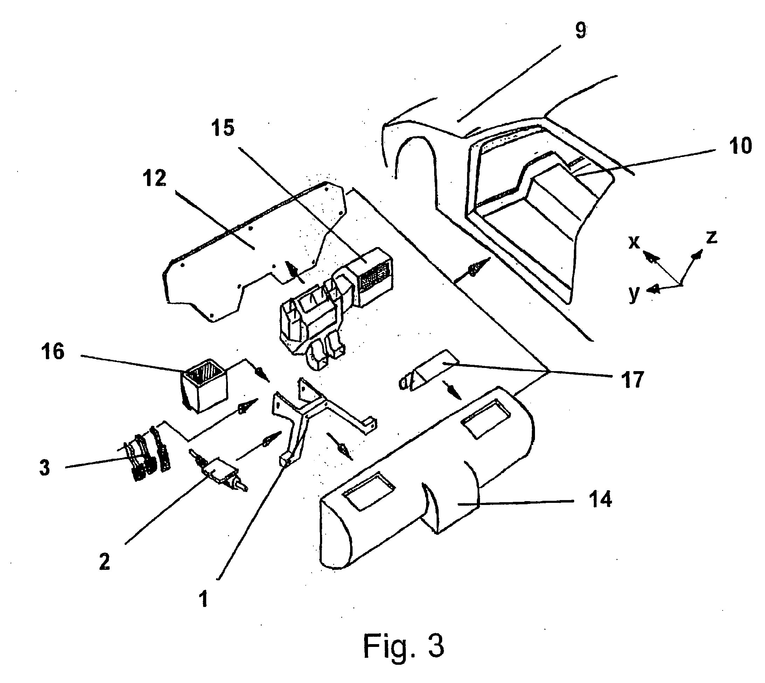

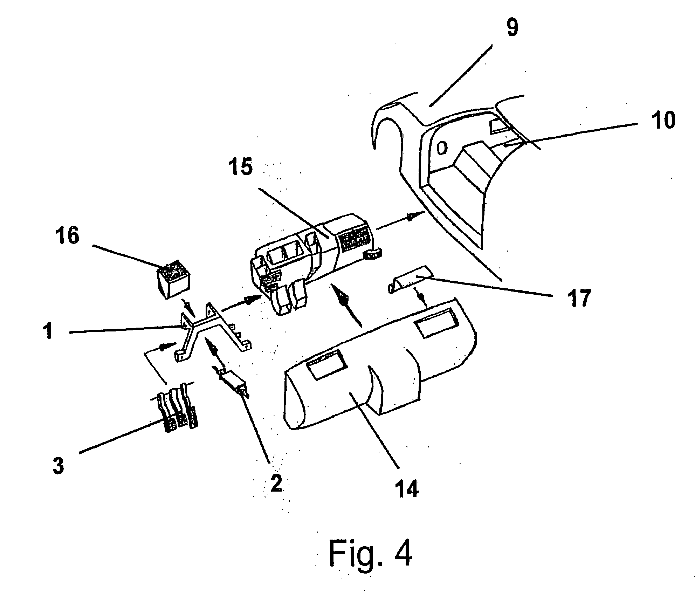

Figur 2 zeigt die erfindungsgemäße Trägeranordnung 1 aus Figur 1, wobei diese jedoch noch mit einem Instrumententafelträger 8 verbunden ist. Der Instrumententafelträger 8 gehört hierbei zu einer Instrumententafel 14 (siehe beispielsweise Figuren 3 und 4). Aus Übersichtlichkeitsgründen ist nur die Trägerstruktur dargestellt. Es ist zu sehen, dass im Fahrerbereich das HUD 16 montiert ist, während auf der Beifahrerseite (also im Bereich der beifahrerseitigen A-Säule 4b) ein Beifahrerairbag 17 vorgesehen ist. An dem Instrumententafelträger können neben dem Beifahrerairbag auch ein Handschuhkasten oder Multimediageräte befestigt sein.

Im Folgenden wird mit Bezug auf Figuren 3 und 4 der Zusammenbau bei verschiedenen Kraftfahrzeugkonzepten vorgestellt.

Hierbei zeigt Figur 3 eine Rohkarosserie des Kraftfahrzeuges, wobei zur Trennung von Fahrzeuginnenraum 10 und Motorraum 9 eine mit der Rohkarosserie des Fahrzeugs verschraubbare Stirnwand-Montageplatte 12 gezeigt ist. Bei der Montage werden eine Lenksäule 2, Pedallerie 3 sowie HUD 16 mit einer erfindungsgemäßen Trägeranordnung und anschließend mit einer Instrumententafel 14 verbunden, wobei diese Instrumententafel zusätzlich mit einem Beifahrerairbag 17 versehen wird. Außerdem wird ein Klimaanlagenmodul 15 mit einer Stirnwandmontageplatte 12 verbunden. Bevor die Stirnwandmontageplatte mit der Rohkarosserie des Kraftfahrzeugs verschraubt wird, kommt es zu einem Zusammenfügen der an der Instrumententafel befestigten Elemente mit der Stirnwandmontageplatte, so dass diese zusammengebauten Elemente dann als ein komplettes Modul in die Rohkarosse einsetzbar sind.

Figur 4 zeigt den Fall, dass zur Trennung von Innenraum 10 und Motorraum 9 eine mit der Rohkarosserie des Kraftfahrzeugs verschweißte Stirnwand 11 vorgesehen ist. Hierbei wird wiederum eine erfindungsgemäße Trägeranordnung 1 mit einer Lenksäule 2 und einer Pedallerie 3 und beispielsweise mit einem Head-up-Display 16 verbunden und anschließend mit einem Klimaanlagenmodul 15 verbunden, welches dann wiederum (über Blasformteile aus Kunststoff) mit einer Instrumententafel 14 versehen ist. Anschließend werden diese Teile mit der Rohkarosserie des Kraftfahrzeugs verbunden, wobei das Klimaanlagenmodul 15 formschlüssig in die verschweißte Stirnwand 11 eingebracht wird und durch Verschraubung der Instrumententafel mit der Rohkarosserie in Fahrzeuglängsrichtung zusätzlich fixiert wird, so dass sich ein fester Halt ergibt.

Die geschilderten Ausführungsbeispiele sollen den Schutzbereich der Erfindung nicht einschränken. Insbesondere die Ausführung der erfindungsgemäßen Trägeranordnung 1 kann (vor allem was die Gestaltung des Lenksäulenmontagebereiches 2a angeht (beispielsweise ob dieser mit einer Montageplatte versehen ist oder auch flächig ausgeführt ist) variieren.

Figuren 1 bis 4 zeigen jeweils die erfindungsgemäße Trägeranordnung, den so genannten "Dreifuß". Hierbei ist es wesentlich, dass dieser einerseits aufgrund seiner diagonalen Streben eine optimale Kraftaufnahme ermöglicht. Andererseits ist durch die beabstandeten Anfangspunkte der Streben ein Bauraum geschaffen, welcher einerseits die leichte Anbringung der Pedallerie ermöglicht zwischen den beiden herauskragenden Platten und außerdem auch in diesem Bereich des HUD 16 sicher unterbringt.

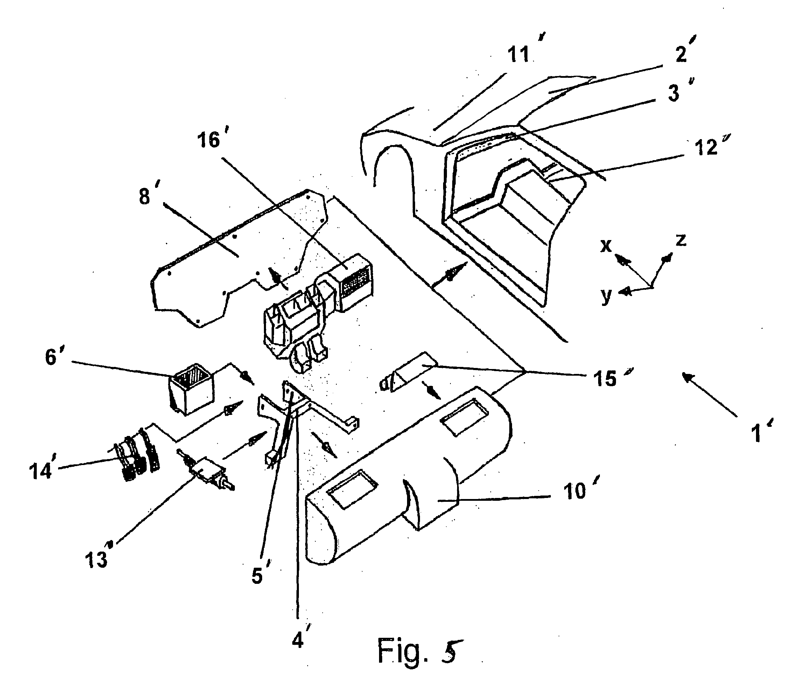

Fig. 5 zeigt eine Rohkarosserie eines Kraftfahrzeugs, wobei zur Trennung von Kfz-Innenraum 12' und Motorraum 11' eine mit der Rohkarosserie des Fahrzeugs verschraubbare Stirnwand-Montageplatte 8' gezeigt ist. Bei der Montage werden eine Lenksäule 13', Pedallerie 14' sowie eine Projektionsvorrichtung 6' mit einem Querträger bzw. einer Trägeranordnung in Form eines "Dreifußes", welcher abschnittsweise einen Querträger 4' enthält und anschließend mit einer Instrumententafel 14' verbunden ist, verbunden, wobei diese Instrumententafel zusätzlich mit einem Beifahrerairbag 15' versehen wird. Außerdem wird ein Klimaanlagenmodul 16.' mit der Stirnwandmontageplatte verbunden. Bevor die Stirnwandmontageplatte mit der Rohkarosserie des Fahrzeugs verschraubt wird, kommt es zu einem Zusammenfügen des an der Instrumententafel befestigten Elementes mit der Stirnwandmontageplatte, so dass ein komplettes Instrumententafelmodul in die Rohkarosserie einsetzbar ist. Nach Einsetzen des Instrumententafelmoduls in die Rohkarosserie wird dann die Projektionsvorrichtung 6' vom Motorraum 11' aus mit dem Fensterspriegel 3' verschraubt. Oberhalb des Fensterspriegels 3' ist eine Windschutzscheibe 2' vorgesehen, welche ebenfalls zu dem Kraftfahrzeug 1' gehört.

Im Folgenden wird näher auf die Befestigung der Projektionsvorrichtung 6' im Bereich des Querträgers 4', von Tragelementen 5' sowie des Fensterspriegels 3' eingegangen.

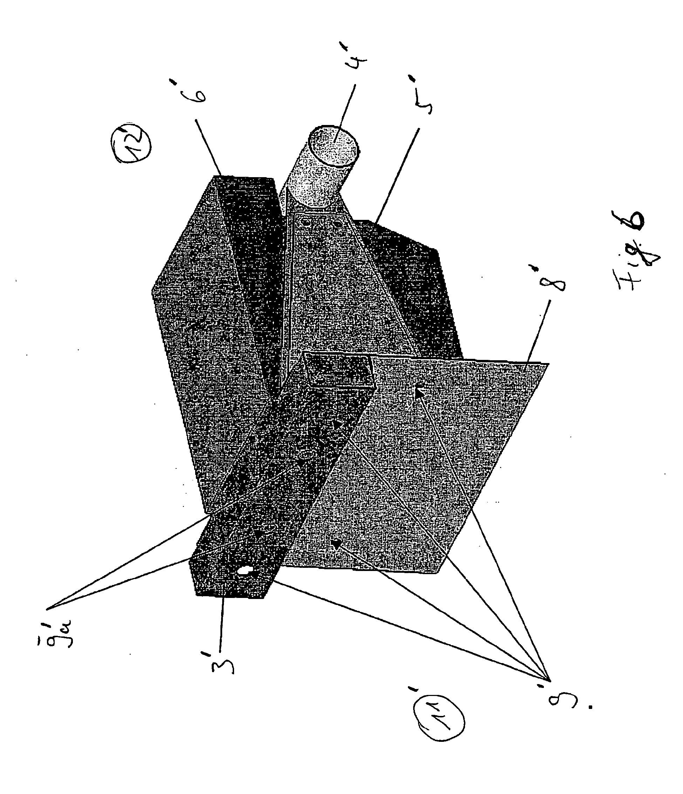

Fig. 6 zeigt eine Detailansicht des Bereichs der Projektionsvorrichtung 6' vom Motorraum 11' aus. Zu sehen ist hierbei der Fensterspriegel 3' sowie die Rückseite der Stirnwand (bzw. Stirnwandmontageplatte) 8'. Auf dieser Rückseite sind mehrere Öffnungen 9' zum Durchführen von Befestigungskörpern vorgesehen. Die Öffnungen 9' dienen hierbei der Durchführung von Schrauben, welche Tragelemente 5' am Fensterspriegel bzw. an der Stirnwand 8' fixieren. Zusätzlich sind Öffnungen vorgesehen, mit welchen eine Verschraubung der Projektionsvorrichtung 6' am Fensterspriegel 3' erfolgt (diese Öffnungen sind mit den Bezugszeichen 9a' bezeichnet).

Die Tragelemente 5' (das hintere Tragelement ist durch die Projektionsvorrichtung 6' verdeckt) verbinden den Querträger 4' also im verschraubten Zustand mit dem Fensterspriegel 3' bzw. zusätzlich mit der Stirnwand 8'. Es sei nochmals betont, dass der hier gezeigte Querträger 4' nur beispielsweise Teil eines Dreifußes (siehe Fig. 5) sein muss, es ist selbstverständlich ebenso möglich, einen durchgehenden Querträger vorzusehen, welcher von der linken bis zur rechten A-Säule eines Kraftfahrzeugs verläuft.

In der Zusammenschau der Figuren gezeigt ist also ein Kraftfahrzeug 1', enthaltend eine Windschutzscheibe 2', einen unterhalb der Windschutzscheibe verlaufenden Fensterspriegel 3' sowie einen zumindest bereichsweise über die Fahrzeugbreite verlaufenden Querträger 4', wobei der Querträger über mindestens ein Tragelement 5' mit dem Fensterspriegel 3' des Kraftfahrzeugs 1' verbindbar ist, wobei im Zwischenraum zwischen Querträger und Fensterspriegel eine. Projektionsvorrichtung 6' eines Head-Up-Displays (HUD) vorgesehen ist und der Fensterspriegel 3' derartige Ausnehmungen (beispielsweise Öffnungen) aufweist, dass die Projektionsvorrichtung 6' des HUD vom Motorraum des Kraftfahrzeugs 1' aus am Fensterspriegel 3' fixierbar ist.

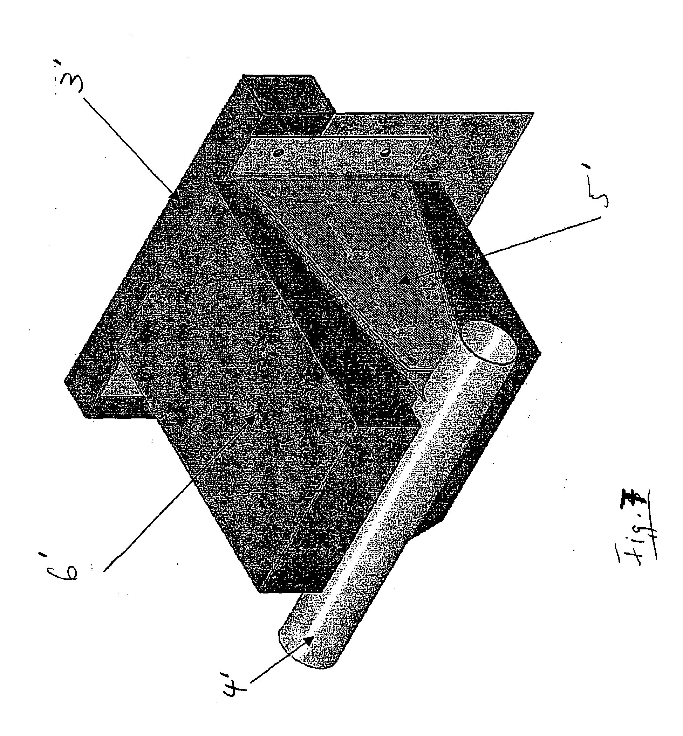

Fig. 7 zeigt nochmals eine Ansicht des Details aus Fig. 6 von der Fahrzeuginnenraumseite 12' aus. Hierbei ist der Querträger 4' gut erkennbar, welcher einen Hohlquerschnitt aufweist, und an welchem die Tragelemente 5' angebracht sind.

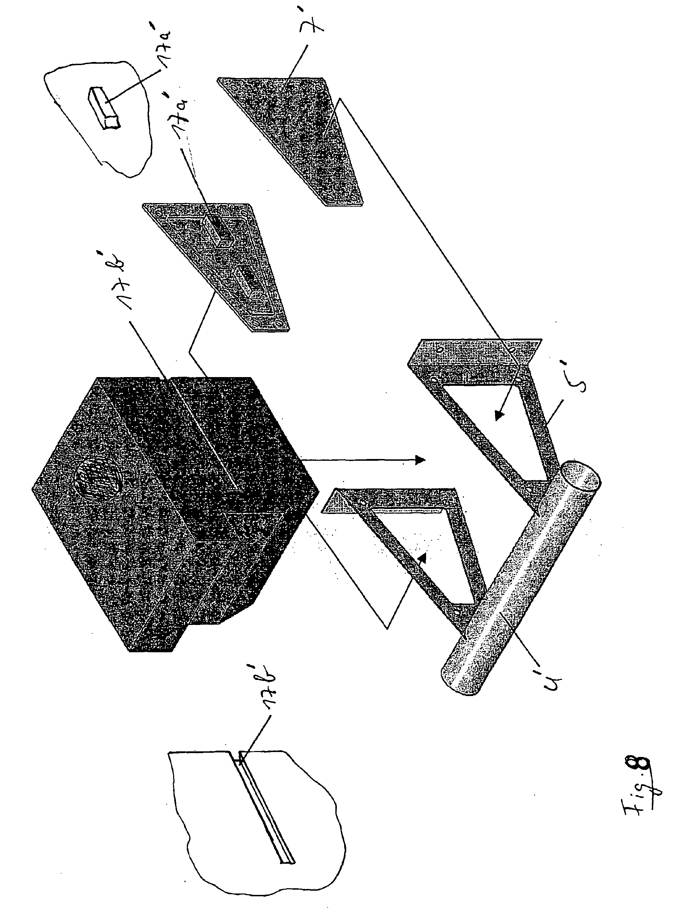

Fig. 8 zeigt nun die Reihenfolge des Zusammenbaus im Bereich des in Fig. 2 bzw. 3 gezeigten Details. Dieser Zusammenbau erfolgt bei der Vormontage eines Instrumententafelmoduls.

Wie in Fig. 8 zu sehen, weist der Querträger 4' zwei mit ihm verbundene (im vorliegenden Beispiel rechtwinklig abstehende) Tragelemente 5' auf, zwischen denen die Projektionsvorrichtung 6' des HUD einsteckbar ist. Die Tragelemente 5' sind hierbei mit dem Querträger 4' fest verbunden (beispielsweise verschweißt). Die Tragelemente 5' weisen Ausschnitte auf, in welche nach dem Einlegen der Projektionsvorrichtung 6' Halteplatten 7' jeweils von den Außenseiten einbringbar sind. Diese Halteplatten weisen Elastomerblöcke 17a' auf, welche beidseits in korrespondierende und komplementäre Schienen 17b' der Projektionsvorrichtung eingreifen. Die Halteplatten 7' werden sodann mit den Tragelementen 5' verschraubt, so dass die Projektionsvorrichtung 6' im Wesentlichen fixiert ist. Mit "im Wesentlichen fixiert" ist gemeint, dass eine minimale Schwingung (welche durch die Elastomerblöcke gedämpft wird) noch möglich ist. Außerdem ist darauf hinzuweisen, dass die Schiene 17b' zur rechten Seite hin offen ist, zur linken Seite hin allerdings einen Absatz aufweist. Hiermit ist ein Herausrutschen der Projektionsvorrichtung aus dem vormontierten Instrumententafelmodul also nicht möglich.

Die Projektionsvorrichtung 6' kann nach dieser Vormontage bereits elektrisch mit dem übrigen Instrumententafelmodul verschaltet werden und bereits messtechnisch überprüft werden, so dass lediglich die mechanische Anbindung bei der Endmontage notwendig ist.

Nach der in Fig. 4 gezeigten Vormontage kann die Endmontage erfolgen. Hierbei werden zunächst Schrauben durch die Öffnungen 9' geführt, welche ein Verschrauben der Tragelemente mit dem Fensterspriegel 3' bzw. der Stirnwand 8' ermöglichen. Die hier gezeigten vier Schrauben sind jedoch nur beispielhaft zu verstehen. Anschließend erfolgt die Fixierung der Projektionsvorrichtung 6' am Fensterspriegel, wobei hierbei die Ausnehmungen 9a' zur Durchführung der Schrauben verwendet werden. Auch hier sind die beiden Verschraubungslöcher lediglich als beispielhafte Anzahl zu verstehen. In jedem Falle sind im Fensterspriegel fluchtende Öffnungen vorgesehen, welche ein Durchführen und rückseitiges Fixieren der Befestigungsmittel ermöglichen.

Als Befestigungsmittel kommen vorzugsweise Schrauben zum Einsatz. Es ist selbstverständlich allerdings auch möglich, entsprechende Drehbolzen, drehbare Hülsen, Nieten oder auch komplementäre Rastelemente vorzusehen.

Ein wichtiger Aspekt ist, dass die in Fig. 6 bis 8 gezeigten Elemente Teil eines vorgefertigten Instrumententafelmoduls sind, welches mit der Rohkarosserie bzw. dem Fensterspriegel dann in der Endmontage verbunden wird. Dieses Instrumententafelmodul weist vorzugsweise bereits eine Instrumententafelverkleidung auf, wobei diese eine Öffnung zum Durchleiten eines Lichtstrahls von der Projektionsvorrichtung zur Windschutzscheibe hin aufweist.

Bei der entsprechenden Montage wird, wie bereits oben ausgeführt, zunächst das Instrumententafelmodul, welches die Projektionsvorrichtung enthält, vormontiert (siehe insbesondere Fig. 8) und anschließend das Modul mit dem Fensterspriegel und/oder weiteren Teilen der Karosserie fest verbunden und zusätzlich die Projektionsvorrichtung des HUD vom Motorraum aus mit dem Fensterspriegel durch Befestigungsmittel verbunden.

Hierzu ist besonders wichtig, dass die Projektionsvorrichtung 6' an ihrer dem Querträger abgewandten Seite (also vom Innenraum abgewandt) eine Befestigungsaufnahme/Befestigungsvorrichtung aufweist, welche form- und kraftschlüssig mit dem Fensterspriegel verbindbar ist durch Eingriff vom Motorraum aus.

## Patentansprüche

1. Kraftfahrzeug (1'), enthaltend eine Windschutzscheibe (2'), einen unterhalb der Windschutzscheibe verlaufenden Fensterspriegel (3') sowie einen zumindest bereichsweise über die Fahrzeugbreite verlaufenden Querträger (4'), wobei der Querträger über mindestens ein Tragelement (5') mit dem Fensterspriegel (3') des Kraftfahrzeuges (1') verbindbar ist, wobei im Zwischenraum zwischen Querträger (4') und Fensterspriegel (3') eine Projektionsvorrichtung (6') eines Head-Up-Displays (HUD) vorgesehen ist und der Fensterspriegel (3') derartige Ausnehmungen aufweist, dass die Projektionsvorrichtung (6') des HUD vom Motorraum des Kraftfahrzeugs (1') aus am Fensterspriegel (3') fixierbar ist.

2. Kraftfahrzeug nach Anspruch 1, **dadurch gekennzeichnet, dass** der Querträger (4') vom Bereich der linken A-Säule des Kraftfahrzeuges (1') zum Bereich der rechten A-Säule des Kraftfahrzeuges durchgehend ist.

3. Kraftfahrzeug nach einem der vorhergehenden Ansprüche 1 oder 2, **dadurch gekennzeichnet, dass** der Querträger lediglich fahrerseitig bereichsweise verläuft.

4. Kraftfahrzeug nach einem der Ansprüche 1 bis 3, **dadurch gekennzeichnet, dass** zwei Tragelemente vorgesehen sind, zwischen denen die Projektionsvorrichtung (6') des HUD anbringbar ist.

5. Kraftfahrzeug nach einem der Ansprüche 1 bis 4, **dadurch gekennzeichnet, dass** das mindestens eine Tragelement (5') plattenförmig ausgeführt ist.

6. Kraftfahrzeug nach einem der Ansprüche 1 bis 5, **dadurch gekennzeichnet, dass** das mindestens eine Tragelement (5') einen Ausschnitt zur Fixierung von Halteplatten (7') aufweisen.

7. Kraftfahrzeug nach Anspruch 6, **dadurch gekennzeichnet, dass** die Halteplatten (7') und die Projektionsvorrichtung des HUD komplementäre Ausnehmungen und hervorstehende Abschnitte aufweisen zur schwimmenden Lagerung der Projektionsvorrichtung (6') des HUD bezüglich der Halteplatte (7').

8. Kraftfahrzeug nach einem der Ansprüche 1 bis 7, **dadurch gekennzeichnet, dass** das mindestens eine Tragelement (5') am Fensterspriegel (3') und zusätzlich an einer unterhalb des Fensterspriegels befindlichen Stirnwand (8') fixierbar ist.

9. Kraftfahrzeug nach einem der Ansprüche 1 bis 8, **dadurch gekennzeichnet, dass** die Projektionsvorrichtung (6') des HUD mit dem Fensterspriegel (3') verklipsbar oder über mindestens ein Befestigungsmittel verschraubbar ist.

10. Kraftfahrzeug nach Anspruch 9, **dadurch gekennzeichnet, dass** der mindestens eine Befestigungsmittel eine Schraube ist.

11. Kraftfahrzeug nach einem der Ansprüche 1 bis 10, **dadurch gekennzeichnet, dass** der Fensterspriegel (3') einen Hohlquerschnitt aufweist, welcher fluchtende Öffnungen (9') zur Durchführung von Befestigungsmitteln aufweist.

12. Kraftfahrzeug nach einem der Ansprüche 1 bis 11, **dadurch gekennzeichnet, dass** der Querträger (4') sowie das mindestens eine Tragelement (5') sowie zumindest die Projektionsvorrichtung des HUD Teil eines vormontierbaren Instrumententafelmoduls sind.

13. Instrumententafelmodul zur Verwendung in einem Kfz nach einem der Ansprüche 1 bis 12, enthaltend einen zumindest bereichsweise über die Kraftfahrzeugbreite verlaufenden Querträger, ein Tragelement zur Anbindung an einem Fensterspriegel eines Kraftfahrzeugs sowie eine Projektionsvorrichtung einer HUD, wobei an der dem Querträger abgewandten Seite der Projektionsvorrichtung eine Befestigungsvorrichtung zur Anbindung der Projektionsvorrichtung an dem Fensterspriegel vorgesehen ist.

14. Instrumententafelmodul nach Anspruch 13, **dadurch gekennzeichnet, dass** dieses im vormontierten Zustand bereits eine Instrumententafelverkleidung (10') aufweist und zumindest eine Öffnung vorgesehen ist zum Durchleiten eines Lichtstrahls von der Projektionsvorrichtung (6') des HUD zu der Windschutzscheibe hin.

15. Verfahren zur Montage eines Kraftfahrzeuges (1'), wobei eine Kraftfahrzeugkarosserie unterhalb des Bereichs einer zu montierenden Windschutzscheibe (2') einen Fensterspriegel (3') enthält, und ferner ein Instrumententafelmodul vorgesehen ist zur Vormontage einer Projektionsvorrichtung eines HUD, **dadurch gekennzeichnet, dass** das Instrumententafelmodul mit dem Fensterspriegel und/oder weiteren Teilen der Karosserie fest verbunden wird und zusätzlich die Projektionsvorrichtung des HUD vom Motorraum (11') aus mit dem Fensterspriegel (3') durch Befestigungsmittel verbunden wird.

16. Verfahren nach Anspruch 15, **dadurch gekennzeichnet, dass** die Befestigungsmittel mindestens eine Schraube, mindestens ein Niet, oder komplementäre Rastelemente sind.

17. Kraftfahrzeug (1'), nach einem der Ansprüche 1 bis 14 **dadurch gekennzeichnet, dass** ein Instrumententafelmodul vorgesehen ist zur Vormontage der Projektionsvorrichtung eines HUD, wobei das Instrumententafelmodul mit dem Fensterspriegel und/oder weiteren Teilen der Karosserie fest verbunden ist.

18. Kraftfahrzeug nach Anspruch 17, **dadurch gekennzeichnet, dass** das Instrumententafelmodul bereits eine Instrumententafelverbindung aufweist, wobei diese eine Öffnung zum Durchleiten eines Lichtstrahls von der Projektionsvorrichtung zur Windschutzscheibe hin aufweist.

## Claims

1. A motor vehicle (1'), containing a windscreen (2'), a window rib (3') extending beneath the windscreen and also a cross member (4') extending at least in regions across the width of the vehicle, the cross member being able to be connected via at least one supporting element (5') to the window rib (3') of the motor vehicle (1'), with a projection device (6') of a head-up display (HUD) being provided in the gap between the cross member (4') and window rib (3') and the window rib (3') having such recesses that the projection device (6') of the HUD can be fixed to the window rib (3') from the engine compartment of the motor vehicle (1').

2. A motor vehicle according to Claim 1, **characterised in that** the cross member (4') is continuous from the region of the left-hand A-pillar of the motor vehicle (1') to the region of the right-hand A-pillar of the motor vehicle.

3. A motor vehicle according to one of the preceding Claims 1 or 2, **characterised in that** the cross member extends in regions merely on the driver's side.

4. A motor vehicle according to one of Claims 1 to 3, **characterised in that** two supporting elements are provided between which the projection device (6') of the HUD can be attached.

5. A motor vehicle according to one of Claims 1 to 4, **characterised in that** the at least one supporting element (5') is of plate-shaped construction.

6. A motor vehicle according to one of Claims 1 to 5, **characterised in that** the at least one supporting element (5') have a cutout for fixing holding plates (7').

7. A motor vehicle according to Claim 6, **characterised in that** the holding plates (7') and the projection device of the HUD have complementary recesses and projecting sections for floating mounting of the projection device (6') of the HUD with respect to the holding plate (7').

8. A motor vehicle according to one of Claims 1 to 7, **characterised in that** the at least one supporting element (5') can be fixed to the window rib (3') and additionally to an end wall (8') located beneath the window rib.

9. A motor vehicle according to one of Claims 1 to 8, **characterised in that** the projection device (6') of the HUD can be clipped to the window rib (3') or can be screwed thereto via at least one fastening means.

10. A motor vehicle according to Claim 9, **characterised in that** the at least one fastening means is a screw.

11. A motor vehicle according to one of Claims 1 to 10, **characterised in that** the window rib (3') has a hollow cross-section which has flush openings (9') for fastening means to pass through.

12. A motor vehicle according to one of Claims 1 to 11, **characterised in that** the cross member (4') and also the at least one supporting element (5') and also at least the projection device of the HUD form part of a dashboard module which can be premounted.

13. A dashboard module for use in a motor vehicle according to one of Claims 1 to 12, containing a cross member extending at least in regions across the width of the vehicle, a supporting element for attaching to a window rib of a motor vehicle and also a projection device of an HUD, a fastening device for attaching the projection device to the window rib being provided on the side of the projection device remote from the cross member.

14. A dashboard module according to Claim 13, **characterised in that** it in the premounted state already has a dashboard trim (10') and at least one opening is provided for passing a light beam through from the projection device (6') of the HUD to the windscreen.

15. A method for assembling a motor vehicle (1'), wherein a motor vehicle body contains, beneath the region of a windscreen (2') which is to be mounted, a window rib (3'), and furthermore a dashboard module is provided for pre-mounting a projection device of an HUD, **characterised in that** the dashboard module is connected securely to the window rib and/or further parts of the vehicle body and additionally the projection device of the HUD is connected to the window rib (3') from the engine compartment (11') by fastening means.

16. A method according to Claim 15, **characterised in that** the fastening means are at least one screw, at least one rivet, or complementary catch elements.

17. A motor vehicle (1') according to one of Claims 1 to 12, **characterised in that** a dashboard module is provided for pre-mounting of the projection device of an HUD, the dashboard module being connected securely to the window rib and/or further parts of the vehicle body.

18. A motor vehicle according to Claim 17, **characterised in that** the dashboard module already has a dashboard connection, this having an opening for passing a light beam through from the projection device to the windscreen.

## Revendications

1. Véhicule automobile (1'), contenant un pare-brise (2'), un arceau de fenêtre (3') s'étendant au-dessous du pare-brise, ainsi qu'une traverse (4') s'étendant au moins par segments sur la largeur du véhicule, la traverse pouvant être raccordée par le biais d'au moins un élément porteur (5') à l'arceau de fenêtre (3') du véhicule automobile (1'), dans lequel il est prévu, dans l'espace intermédiaire entre la traverse (4') et l'arceau de fenêtre (3'), un dispositif de projection (6') d'un affichage tête haute (Head-Up Display ou HUD) et l'arceau de fenêtre (3') présente des évidements tels que le dispositif de projection (6') du HUD puisse être fixé depuis le compartiment moteur du véhicule automobile (1') sur l'arceau de fenêtre (3').

2. Véhicule automobile selon la revendication 1, **caractérisé en ce que** la traverse (4') est d'un seul tenant de la zone de la colonne A gauche du véhicule automobile (1') à la zone de la colonne A droite du véhicule automobile.

3. Véhicule automobile selon l'une quelconque des revendications précédentes 1 ou 2, **caractérisé en ce que** la traverse s'étend uniquement côté conducteur par segments.

4. Véhicule automobile selon l'une quelconque des revendications 1 à 3, **caractérisé en ce que** l'on prévoit deux éléments porteurs entre lesquels peut être installé le dispositif de projection (6') du HUD.

5. Véhicule automobile selon l'une quelconque des revendications 1 à 4, **caractérisé en ce que** le au moins un élément porteur (5') est conformé en plaque.

6. Véhicule automobile selon l'une quelconque des revendications 1 à 5, **caractérisé en ce que** le au moins un élément porteur (5') présente une découpe pour la fixation de plaques de soutien (7').

7. Véhicule automobile selon la revendication 6, **caractérisé en ce que** les plaques de soutien (7') et le dispositif de projection du HUD présentent des évidements complémentaires et des sections saillantes pour le montage flottant du dispositif de projection (6') du HUD par rapport à la plaque de soutien (7').

8. Véhicule automobile selon l'une quelconque des revendications 1 à 7, **caractérisé en ce que** le au moins un élément porteur (5') peut être fixé sur l'arceau de fenêtre (3') et en outre sur une paroi frontale (8') se trouvant au-dessous de l'arceau de fenêtre.

9. Véhicule automobile selon l'une quelconque des revendications 1 à 8, **caractérisé en ce que** le dispositif de projection (6') du HUD peut être fixé par clipsage à l'arceau de fenêtre (3') ou par vissage par le biais d'au moins un moyen de fixation.

10. Véhicule automobile selon la revendication 9, **caractérisé en ce que** le au moins un moyen de fixation est une vis.

11. Véhicule automobile selon l'une quelconque des revendications 1 à 10, **caractérisé en ce que** l'arceau de fenêtre (3') présente une section transversale creuse, qui présente des ouvertures alignées (9') adaptées pour faire pénétrer des moyens de fixation.

12. Véhicule automobile selon l'une quelconque des revendications 1 à 11, **caractérisé en ce que** la traverse (4'), ainsi que le au moins un élément porteur (5') et le au moins un dispositif de projection du HUD, font partie d'un module de tableau de bord pouvant être prémonté.

13. Module de tableau de bord pour usage dans un véhicule automobile selon l'une quelconque des revendications 1 à 12, contenant une traverse s'étendant au moins par segments sur la largeur du véhicule automobile, un élément porteur pour relier sur un arceau de fenêtre d'un véhicule automobile, ainsi qu'un dispositif de projection d'un HUD, dans lequel il est prévu, sur le côté opposé à la traverse du dispositif de projection, un dispositif de fixation pour relier le dispositif de projection à l'arceau de fenêtre.

14. Module de tableau de bord selon la revendication 13, **caractérisé en ce que** celui-ci présente déjà, à l'état prémonté, un habillage de tableau de bord (10') et **en ce qu'**il est prévu au moins une ouverture pour faire passer un rayon lumineux du dispositif de projection (6') du HUD au pare-brise.

15. Procédé de montage d'un véhicule automobile (1'), dans lequel une carrosserie de véhicule automobile contient, au-dessous de la zone d'un pare-brise (2') à monter, un arceau de fenêtre (3') et il est en outre prévu un module de tableau de bord pour le prémontage d'un dispositif de projection d'un HUD, **caractérisé en ce que** le module de tableau de bord est raccordé de manière fixe à l'arceau de fenêtre et/ou à d'autres parties de la carrosserie et le dispositif de projection du HUD est en outre raccordé depuis le compartiment moteur (11') à l'arceau de fenêtre (3') par des moyens de fixation.

16. Procédé selon la revendication 15, **caractérisé en ce que** les moyens de fixation sont au moins une vis, au moins un rivet ou des éléments d'encliquetage complémentaires.

17. Véhicule automobile (1') selon l'une quelconque des revendications 1 à 12, **caractérisé en ce qu'**il est prévu un module de tableau de bord pour le prémontage du dispositif de projection d'un HUD, le module de tableau de bord étant raccordé de manière fixe à l'arceau de fenêtre et/ou à d'autres parties de la carrosserie.

18. Véhicule automobile selon la revendication 17, **caractérisé en ce que** le module de tableau de bord présente déjà un raccord de tableau de bord, dans lequel celui-ci présente une ouverture pour faire passer un rayon lumineux du dispositif de projection au pare-brise.
